(19) Europäisches Patentamt
European Patent Office
Office européen des brevets

(11) **EP 4 751 825 A1**

(12) **EUROPEAN PATENT APPLICATION**
published in accordance with Art. 153(4) EPC

(43) Date of publication:
**03.06.2026 Bulletin 2026/23**

(21) Application number: **24845603.0**

(22) Date of filing: **23.07.2024**

(51) International Patent Classification (IPC):
***B22F 1/00*** (2022.01)     ***B22F 10/28*** (2021.01)
***B22F 10/362*** (2021.01)     ***B33Y 70/00*** (2020.01)
***B33Y 80/00*** (2015.01)     ***C22C 38/00*** (2006.01)
***C22C 38/58*** (2006.01)

(52) Cooperative Patent Classification (CPC):
**B22F 1/00; B22F 10/28; B22F 10/362; B33Y 70/00;
B33Y 80/00; C22C 38/00; C22C 38/58;** Y02P 10/25

(86) International application number:
**PCT/JP2024/026232**

(87) International publication number:
**WO 2025/023228 (30.01.2025 Gazette 2025/05)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **26.07.2023  JP 2023121766**

(71) Applicant: **Sanyo Special Steel Co., Ltd.
Himeji-shi, Hyogo 672-8677 (JP)**

(72) Inventors:
• **TSUJII, Yuka
  Himeji-shi, Hyogo 672-8677 (JP)**
• **HAGIYA, Toru
  Himeji-shi, Hyogo 672-8677 (JP)**
• **SAWADA, Toshiyuki
  Himeji-shi, Hyogo 672-8677 (JP)**

(74) Representative: **Müller-Boré & Partner
Patentanwälte PartG mbB
Friedenheimer Brücke 21
80639 München (DE)**

(54) **HOT WORK TOOL STEEL POWDER FOR MOLDING AND MOLDED BODY USING SAME**

(57) An object of the present invention is to provide a hot-work tool steel powder for shaping, which enables the production of a shaped article that can be easily quenched up to its deep portion, is unlikely to cause cracking in the shaped article itself and/or at the interface between the shaped article and the shaping substrate, and has high thermal conductivity, even when a shaped article produced is a large-sized shaped article, as well as a shaped article produced using the hot-work tool steel powder for shaping, and the present invention provides a hot-work tool steel powder for shaping, consisting of, in terms of % by mass,
the following essential additive components:
C: more than 0.10% and less than 0.45%; and

Ni: more than 2.00% and less than 8.00%,

one or more of the following optional additive components:
Si: less than 0.60%;
Mn: less than 5.00%;
Cr: less than 2.00%;
Mo: less than 1.20%;
W: less than 2.00%;
V: less than 0.60%; and
Al: less than 0.10%, and

the balance consisting of Fe and inevitable impurities, wherein Ni + Mn is less than 8.50%.

EP 4 751 825 A1

**Description**

FIELD OF INVENTION

The present invention relates to a hot-work tool steel powder for shaping and a shaped article produced using the hot-work tool steel powder. Specifically, the present invention relates to a hot-work tool steel powder for shaping and a shaped article obtained by a shaping method, such as an additive manufacturing method (also referred to a 3D printer method, three-dimensional shaping method, additive manufacturing, or additive fabrication method), using the hot-work tool steel powder, the shaped article serving as various tools (for example, hot-work tools) including a die, and particularly relates to a hot-work tool steel powder for shaping that enables the production of a shaped article which, even when the shaped article is large in size, exhibits sufficient hardenability, high resistance to cracking during shaping, and high thermal conductivity, and also has excellent mechanical properties, as well as to a shaped article produced using the hot-work tool steel powder.

In the present specification, the term "high resistance to cracking during shaping" refers to a property whereby cracking is unlikely to occur in the shaped article itself (in particular, at a site serving as a notch) and/or at the interface between the shaped article and the shaping substrate, due to thermal stress or the like associated with rapid melting and rapid solidification during shaping.

BACKGROUND ART

An additive manufacturing method can produce a part having a complicated shape or a three-dimensional structure, unlike conventional processing methods, and remarkable technological development and expansion of the application range have been increasingly progressing in recent years. The application of the additive manufacturing method to various tools has been studied, and practical implementation is being promoted particularly for die-casting dies that incorporate a complicated cooling water channel having a three-dimensional structure inside.

Meanwhile, a tool produced using hot-work tool steel is also used for processing various parts, whereas its shape or size varies depending on processing methods or part shapes. However, the application of the additive manufacturing method to a tool has been limited to a relatively small-sized tool because cracking during shaping tends to occur as described below.

In general, the additive manufacturing method enables the production of a part having a complicated three-dimensional shape by heating a powder or wire serving as a raw material with a narrowly focused heat source such as a laser or an electron beam for a short time to rapidly melt and solidify the raw material, and by repeating such melting and solidification to stack solidified layers. In such processes, only a portion of the part is heated, melted, and solidified, and therefore thermal stress is generated due to local solidification shrinkage, thermal expansion, and thermal contraction. When the material to be shaped or the shaping substrate is hard and brittle, the material cannot withstand thermal stress generated, and cracking occurs in the shaped article itself and/or at the interface between the shaped article and the shaping substrate.

Such thermal stress becomes even greater in the case of additive manufacturing of a large shaped article, thereby making cracking during shaping more likely to occur. In general, a high-hardness alloy such as SKD61 of the JIS standard is often used for a tool, and therefore cracking during shaping is more likely to occur. For these reasons, conventionally, the application of the additive manufacturing method to a tool has been limited to a small tool with relatively small thermal stress.

The surface of a hot-work tool, including a die-casting die, comes into contact with a high-temperature part (workpiece) to be processed, and therefore its temperature rises, making it susceptible to damage such as heat checks.. In addition, seizure easily occurs particularly at sites where the temperature rises significantly.

In order to avoid these issues, it is important to efficiently cool the surface of a hot-work tool, and the use of an alloy having high thermal conductivity as the material of the hot-work tool allows the cooling effect of a water cooling channel placed inside the tool to be maximally utilized up to the surface of the hot-work tool.

In addition, processing a part using a hot-work tool requires the tool to be cooled after processing the part and before processing the next part, and therefore the ability to efficiently cool the tool to a predetermined temperature (in a short time) provides the advantage of shortening the part processing cycle and improving part production efficiency.

The applicant proposes, as an additively manufactured shaped article with such a hot-work tool steel high in thermal conductivity, for example, a shaped article produced from an Fe-base alloy powder containing, in terms of % by mass, 0.20 < C < 0.60, Si < 0.60, Mn < 0.90, Cr < 4.00, Ni < 2.00, Mo < 1.20, W < 2.00, V < 0.60, and Al < 0.10, with the balance consisting of Fe and inevitable impurities, and satisfying the following Formulae (1) to (3) (see Patent Literature 1).

$$T1 = 71.7 - 5.9Mn - 6.3Cr - 2.8V - 5.7Mo - 1.1W - 23.1C - 5.8Ni - 1.9Si - 0.5Al - 0.6PC > 32.0 \qquad \text{Formula (1)}$$

$$T2 = 80.1 + 2.4Mn + 1.6Si + 7.1Cr - 12.0PC > 50.0 \ldots \text{Formula (2)}$$

Average size (μm) of carbide included in shaped article: $PC < 3.0 \ldots$ Formula (3)

CITATION LIST

PATENT LITERATURE

Patent Literature 1: JP 2022-092524 A

SUMMARY OF INVENTION

TECHNICAL PROBLEM

In Patent Literature 1 described above, thermal conductivity decreases as the amounts of various additive elements increase, and therefore high thermal conductivity is intended to be achieved by defining the lower limits of the amounts of these additive elements and the T1 parameter. In other words, high thermal conductivity is intended to be obtained by reducing the amount of each additive element as compared to SKD61, which is a general-purpose steel commonly used for a hot-work tool.

However, since such various additive elements contribute to improving hardenability, reducing the amounts of these additive elements also inevitably leads to a decrease in hardenability.

Conventionally, from the viewpoint of preventing cracking during shaping caused by thermal stress, the application of the additive manufacturing method has been practically limited to a relatively small-sized hot-work tool. In other words, an alloy having relatively low hardenability can be used without issues for producing a relatively small-sized shaped article, although, when the alloy is used for producing a large-sized shaped article, the alloy cannot achieve a sufficient cooling rate during quenching (and thus cannot achieve sufficient hardness after quenching and tempering) in a deep portion of the large-sized shaped article.

However, in order to respond to the recent trend toward expanding the application range of a tool obtained by the additive manufacturing method and/or the demand for utilizing an additively manufactured shaped article in a larger-sized hot-work tool, both hardenability and high thermal conductivity, which are in a trade-off relationship depending on the amounts of various additive elements, should be satisfied at high levels. Conventional alloys have been unable to maintain both properties at high levels.

Since the additive manufacturing method involves a rapid cooling process, an additively manufactured shaped article in an as-built state may be in a pseudo-quenched state. Therefore, the additively manufactured shaped article may sometimes be used after only tempering or stress-relief heat treatment, without applying any quenching treatment, after additive manufacturing. However, in the case of a large-sized shaped article, heat tends to accumulate at the central portion due to the heat source during shaping, resulting in higher temperature and reducing the effectiveness of rapid cooling. Consequently, an alloy having low hardenability still tends to exhibit low hardness at a deep portion of the shaped article, which hinders an increase in the size of the shaped article.

While it is known that cracking during shaping is lessened by preheating the shaping substrate during shaping, a preheating temperature ranging from about 80 to 300°C is often adopted due to the design of a shaping apparatus, and this situation is problematic because the rapid cooling effect during shaping is hardly exerted not only for a large-sized shaped article but also for a small-sized shaped article, and an alloy having low hardenability tends to cause the hardness of a deep portion of the shaped article to decrease.

The optimal hardness for use of various tools varies depending on the intended application, and there are applications where about 40 HRC is preferred and applications where about 50 HRC is preferred. When the hardness differs between a surface layer portion and a deep portion due to poor hardenability, it becomes difficult to adjust the entire tool to the optimal hardness for use, which may lead to failures. It is also important to reduce the variation in hardness depending on location, apart from the absolute value of hardness.

From the foregoing, an object of the present invention is to provide a hot-work tool steel powder for shaping, which enables the production of a shaped article that can be easily quenched up to its deep portion, is unlikely to cause cracking in the shaped article itself and/or at the interface between the shaped article and the shaping substrate, and has high thermal conductivity, even when a shaped article produced is a large-sized shaped article, as well as a shaped article produced using the hot-work tool steel powder.

SOLUTION TO PROBLEM

In view of the above circumstances, the present inventors have made intensive development of the composition of a hot-work tool steel for shaping, which enables the production of a shaped article that has hardenability providing sufficient hardness after quenching and has high thermal conductivity even when the shaped article produced is a large-sized shaped article, and have focused on Ni as an element that not only enables high hardenability to be achieved but also minimizes the reduction in thermal conductivity. As a result of these studies, the present inventors have found that both properties can be satisfied at high levels by strictly defining the amounts of Ni, Cr and/or other elements added, thereby leading to the present invention.

As described above, when a shaped article produced is a large-sized shaped article, increased thermal stress is generated, resulting in a higher likelihood of cracking during shaping. However, the present inventors have further found that a shaped article in an as-built state can be reduced in hardness and is also excellent in resistance to cracking during shaping by defining not only the amounts of Ni and Cr added, but also the amount of C added. In other words, the present invention relates to a hot-work tool steel powder for shaping which is practically applicable to a larger-sized shaped article, as compared with a conventional hot-work tool steel powder for shaping which has been mainly applied to a small-sized shaped article, wherein the hot-work tool steel powder for shaping enables the production of a shaped article which is not only improved in hardenability, but also minimizes the reduction in thermal conductivity, by optimization of the ranges of the amounts of Ni, Cr and C added, and furthermore which has high resistance to cracking during shaping even when a shaped article produced is a large-sized shaped article, as well as an additively manufactured shaped article produced using the hot-work tool steel powder for shaping.

A first means for achieving the object of the present invention is a hot-work tool steel powder for shaping, consisting of, in terms of % by mass,

the following essential additive components:

C: more than 0.10% and less than 0.45%; and
Ni: more than 2.00% and less than 8.00%,

one or more of the following optional additive components:

Si: less than 0.60%;
Mn: less than 5.00%;
Cr: less than 2.00%;
Mo: less than 1.20%;
W: less than 2.00%;
V: less than 0.60%; and
Al: less than 0.10%, and

the balance consisting of Fe and inevitable impurities,
wherein Ni + Mn is less than 8.50%.

A second means for achieving the object of the present invention is a shaped article produced using the hot-work tool steel powder for shaping according to the first means.

A third means for achieving the object of the present invention is the shaped article according to the second means, wherein the shaped article is an additively manufactured shaped article.

ADVANTAGEOUS EFFECTS OF INVENTION

According to the present invention, it is possible to provide a hot-work tool steel powder for shaping, which enables the production of a shaped article that can be easily quenched up to its deep portion, is unlikely to cause cracking in the shaped article itself and/or at the interface between the shaped article and the shaping substrate, and has high thermal conductivity, even when a shaped article produced is a large-sized shaped article, as well as a shaped article produced using the hot-work tool steel powder.

According to the present invention, an excellent effect can be realized, for example, both high hardenability and a high thermal conductivity can be achieved even in a case where a shaped article is obtained by a shaping method in which quenching is omitted, a shaping method in which a small-sized shaped article is produced, or a shaping method in which a shaping substrate is preheated during shaping.

DETAILED DESCRIPTION OF INVENTION

The present invention relates to hot-work tool steel. The hot-work tool steel according to the present invention consists of, in terms of % by mass,

the following essential additive components:

C: more than 0.10% and less than 0.45%; and
Ni: more than 2.00% and less than 8.00%,

one or more of the following optional additive components:

Si: less than 0.60%;
Mn: less than 5.00%;
Cr: less than 2.00%;
Mo: less than 1.20%;
W: less than 2.00%;
V: less than 0.60%; and
Al: less than 0.10%, and

the balance consisting of Fe and inevitable impurities,
wherein Ni + Mn is less than 8.50%.

The present invention also relates to a hot-work tool steel powder. The hot-work tool steel powder according to the present invention is a powder consisting of the hot-work tool steel according to the present invention. The hot-work tool steel powder according to the present invention can be used as a material for shaping (preferably additive manufacturing).

The present invention also relates to a hot-work tool steel powder for shaping. The hot-work tool steel powder for shaping according to the present invention is a powder for use as a material for shaping (preferably additive manufacturing), in which the powder consists of the hot-work tool steel according to the present invention.

The present invention also relates to a shaped article. The shaped article according to the present invention is a shaped article produced using the hot-work tool steel powder for shaping according to the present invention. The shaped article according to the present invention is preferably an additively manufactured shaped article obtained by additive manufacturing with the hot-work tool steel powder for shaping according to the present invention. The shaped article according to the present invention preferably consists of the hot-work tool steel according to the present invention, like the hot-work tool steel powder for shaping according to the present invention. The shaped article according to the present invention is subjected to one or more types of desired processing (for example, quenching, tempering, and/or cutting) and then made into a hot-work tool.

The hot-work tool steel is an alloy steel suitable for a hot-work tool. Examples of the hot-work tool include dies, and examples of dies include die-casting dies such as aluminum die-casting dies.

Specific examples of the method for producing the hot-work tool steel powder include a water atomizing method, a single-roll rapid cooling method, a twin-roll rapid cooling method, a gas atomizing method, a disc atomizing method, and a centrifugal atomizing method. The hot-work tool steel powder is preferably a gas atomized powder from the viewpoint of spheroidizing or the like. The powder produced may be used as a raw material powder for shaping, after particle size adjustment by sieving or the like.

Specific examples of the method for producing the shaped article include a rapid melting and rapid solidification process including a step of melting and solidifying the hot-work tool steel powder. Specific examples of this process include a three-dimensional additive manufacturing method, a thermal spraying method, a laser coating method, and a cladding method. Specific examples of the three-dimensional additive manufacturing method include a powder bed fusion system (powder bed system) and a directional energy deposition system (powder deposition system). Specific examples of the powder bed fusion system (powder bed system) include a selective laser sintering (SLS) system, a selective laser melting (SLM) system, and an electron beam melting (EBM) system. The hot-work tool steel powder is suitable for the three-dimensional additive manufacturing method, in particular the three-dimensional additive manufacturing method of the powder bed fusion system, thereby enabling the formation of a large-sized additively manufactured shaped article at a high density.

For example, a 3D printer can be used in the three-dimensional additive manufacturing method. In the additive manufacturing method of the powder bed fusion system (powder bed system), a hot-work tool steel powder is bedded and irradiated with a laser beam or an electron beam. The irradiation allows particles to be rapidly heated and rapidly molten. The particles molten are then rapidly solidified. The melting and solidification allow the particles to be bonded. The irradiation is selectively applied to one portion of the hot-work tool steel powder bedded. A portion of the powder bedded, not irradiated, is not molten. A bonding layer is formed only in the portion irradiated.

The hot-work tool steel powder is further bedded thinly on the bonding layer. One portion of this hot-work tool steel powder is irradiated with a laser beam or an electron beam. The irradiation allows particles to be rapidly molten. The particles molten are then rapidly solidified. The melting and solidification allow the particles in the powder to be bonded, and a new bonding layer is formed. This new bonding layer is also bonded with the existing bonding layer.

By repeatedly bonding through irradiation, an aggregate of bonding layers gradually grows. This growth allows an additively manufactured shaped article having a three-dimensional shape to be obtained. This additive manufacturing method allows an additively manufactured shaped article having a complicated shape to be easily obtained.

In the present specification, the "hardness after quenching and tempering" of a shaped article refers to the hardness of the shaped article subjected to quenching treatment after shaping and thereafter subjected to tempering treatment. However, since additive manufacturing involves rapid melting and rapid solidification, even an additively manufactured shaped article in an as-built state may be in a pseudo-quenched state. Therefore, an additively manufactured shaped article may sometimes be used after only tempering or stress-relief heat treatment, without applying any quenching treatment, after additive manufacturing. In such a case, the "hardness after quenching and tempering" of an additively manufactured shaped article refers to the hardness of the additively manufactured shaped article subjected to only tempering or stress-relief heat treatment, without applying any quenching treatment, after additive manufacturing.

Hereinafter, the reasons for defining the content of essential additive components (C and Ni) and optional additive component(s) (one or two or more of Si, Mn, Cr, Mo, W, V and Al) of the hot-work tool steel according to the present invention are described below. "%" for the content of each component represents % by mass. The balance other than the essential additive components and optional additive component(s) consists of Fe and inevitable impurities.

C: more than 0.10% and less than 0.45%

C is an essential component for providing high hardness after quenching and tempering by being present in the form of a solid solution in a martensite phase as a matrix and by precipitating fine carbides. However, when the content of C is 0.10% or less, high hardness after quenching and tempering cannot be obtained. Therefore, the lower limit of the content of C is set to more than 0.10%. The lower limit of the content of C is preferably 0.20% or more, and more preferably 0.30% or more. On the hand, when the content of C is 0.45% or more, the hardness of a shaped article in an as-built state becomes excessively higher, resulting in not only a large effect of deterioration in resistance to cracking during shaping as compared with other components, but also an increase in amount of C in solid solution and thus a reduction in thermal conductivity. Therefore, the upper limit of the content of C is set to less than 0.45%. The upper limit of the content of C is preferably 0.42% or less, and more preferably 0.40% or less. Each of these upper limits may be combined with any of the above-mentioned lower limits.

Ni: more than 2.00% and less than 8.00%

Ni is an essential component for improving hardenability and improving the hardness after quenching and tempering even in a deep portion of a large-sized shaped article, and is the most important component in the present invention because the effect of reducing thermal conductivity is relatively small compared with those of other components. Ni also has the effect of delaying martensitic transformation during cooling in shaping and also has the effect of maintaining austenite, which is soft and resistant to cracking during shaping, to a relatively low temperature, thereby improving resistance to cracking during shaping. However, when the content of Ni is 2.00% or less, the effect is insufficient. Therefore, the lower limit of the content of Ni is set to more than 2.00%. The lower limit of the content of Ni is preferably 2.30% or more, and more preferably 3.00% or more. On the other hand, when the content of Ni is 8.00% or more, the amount of Ni in solid solution in the matrix increases and significantly reduces thermal conductivity. Therefore, the upper limit of the content of Ni is set to less than 8.00%. The upper limit of the content of Ni is preferably 6.50% or less, and more preferably 5.00% or less. Each of these upper limits may be combined with any of the above-mentioned lower limits.

Si: less than 0.60%

Si is a component that improves hardness by being present in the form of a solid solution in the matrix. Si also has the effect of improving softening resistance. Therefore, the content of Si is set to 0% or more and less than 0.60%. When the content of Si is 0.60% or more, the amount of Si in solid solution increases and significantly reduces thermal conductivity. Therefore, the upper limit of the content of Si is set to less than 0.60%. The upper limit of the content of Si is preferably 0.40% or less, and more preferably 0.24% or less. The content of Si may be 0% or may be more than 0%. Si is a component that improves hardness and softening resistance, and therefore in a case where Si is added, the lower limit of the content of Si is preferably 0.04% or more, and more preferably 0.10% or more. Each of these lower limits may be combined with any of the above-mentioned upper limits.

Mn: less than 5.00%

Mn is a component that improves hardenability and improves the hardness after quenching and tempering even in a deep portion of a large-sized shaped article. Mn also has the effect of improving softening resistance. Therefore, the content of Mn is set to 0% or more and less than 5.00%. When the content of Mn is 5.00% or more, the amount of Mn in solid solution increases and reduces thermal conductivity. Therefore, the upper limit of the content of Mn is set to less than 5.00%. The upper limit of the content of Mn is preferably 1.00% or less, and more preferably 0.41% or less. The content of Mn may be 0% or may be more than 0%. In a case where Mn is added, the lower limit of the content of Mn is preferably 0.05% or more, and more preferably 0.11% or more, from the viewpoint of improving the hardness after quenching and tempering and improving softening resistance even in a deep portion of a large-sized shaped article. Each of these lower limits may be combined with any of the above-mentioned upper limits.

Ni + Mn: less than 8.50%

Mn is a component having a similar effect to that of Ni. However, when the total content of Mn and Ni is 8.50% or more, the amount of Mn and Ni in solid solution in the matrix increases and significantly reduces thermal conductivity. Therefore, the total content of Ni and Mn is set to less than 8.50%. The total content of Ni and Mn is preferably 7.00% or less, and more preferably 5.00% or less.

Cr: less than 2.00%

Cr is a component that improves hardenability and improves the hardness after quenching and tempering even in a deep portion of a large-sized shaped article. Cr also has the effect of improving softening resistance. However, when the content of Cr is 2.00% or more, the amount of Cr in solid solution increases and reduces thermal conductivity, and this reduction effect is relatively large as compared with those of other components. Therefore, the content of Cr is set to 0% or more and less than 2.00%. The upper limit of the content of Cr is preferably 1.50% or less, and more preferably 1.15% or less. The content of Cr may be 0% or may be more than 0%. Cr is a component that improves hardenability and improves the hardness after quenching and tempering even in a deep portion of a large-sized shaped article, and also has the effect of improving softening resistance, and therefore in a case where Cr is added, the lower limit of the content of Cr is preferably 0.50% or more, and more preferably 0.85% or more. Each of these lower limits may be combined with any of the above-mentioned upper limits.

Mo: less than 1.20%

Mo is a component that promotes secondary hardening during tempering and improves the hardness after quenching and tempering. Although the addition of Mo reduces thermal conductivity, its contribution to such reduction is small, while its effect on improving hardness is significant. Therefore, the content of Mo is set to 0% or more and less than 1.20%. The upper limit of the content of Mo is preferably 1.05% or less, and more preferably 0.95% or less. The content of Mo may be 0% or may be more than 0%. Mo is a component that promotes secondary hardening during tempering and improves the hardness after quenching and tempering, and although the addition of Mo reduces thermal conductivity, its contribution to such reduction is small, while its effect on improving hardness is significant. Therefore, in a case where Mo is added, the lower limit of the content of Mo is preferably 0.60% or more, and more preferably 0.75% or more. Each of these lower limits may be combined with any of the above-mentioned upper limits.

W: less than 2.00%

W is a component that promotes secondary hardening during tempering and improves the hardness after quenching and tempering. Although the addition of W reduces thermal conductivity, its contribution to such reduction is small, while its effect on improving hardness is significant. Therefore, the content of W is set to 0% or more and less than 2.00%. The upper limit of the content of W is preferably 1.00% or less, and more preferably 0.50% or less. The content of W may be 0% or may be more than 0%. W is a component that promotes secondary hardening during tempering and improves the hardness after quenching and tempering, and although the addition of W reduces thermal conductivity, its contribution to such reduction is small, while its effect on improving hardness is significant. Therefore, in a case where W is added, the lower limit of the content of W is preferably 0.05% or more, and more preferably 0.10% or more. Each of these lower limits may be combined with any of the above-mentioned upper limits.

V: less than 0.60%

V is a component that promotes secondary hardening during tempering and improves the hardness after quenching and tempering, but excessive addition causes a reduction in thermal conductivity. Therefore, the content of V is set to 0% or more and less than 0.60%. The upper limit of the content of V is preferably 0.55% or less, and more preferably 0.50% or less. The content of V may be 0% or may be more than 0%. V is a component that promotes secondary hardening during tempering and improves the hardness after quenching and tempering, and therefore, in a case where V is added, the lower limit of the content of V is preferably 0.20% or more, and more preferably 0.30% or more. Each of these lower limits may be combined with any of the above-mentioned upper limits.

Al: less than 0.10%

Al is a component that forms nitrides and suppresses crystal grain coarsening during quenching. However, when Al is added in an amount of 0.10% or more, excessive Al nitride formation reduces toughness. A reduction in thermal conductivity also occurs. Therefore, the content of Al is set to 0% or more and less than 0.10%. The upper limit of the content of Al is preferably 0.07% or less, and more preferably 0.04% or less. The content of Al may be 0% or may be more than 0%. Al is a component that forms nitrides and suppresses crystal grain coarsening during quenching, and therefore, in a case where Al is added, the lower limit of the content of Al is preferably 0.001% or more, and more preferably 0.002% or more. Each of these lower limits may be combined with any of the above-mentioned upper limits. Al may not be intendedly added and may be inevitably incorporated from a refractory material or the like used for melting in gas atomizing; however, the effect of Al contained is exerted in the same manner in any case.

EXAMPLES

Table 1 shows the component compositions of steel powders in Example Nos. 1 to 19 and Comparative Example Nos. 1 to 6 (each unit is % by mass). The balance (Bal.) consists of Fe and inevitable impurities. It is noted that these Examples are illustrative embodiments of the present invention, and the scope of the present invention is not limited to these Examples.

[Table 1]

| | No. | C | Si | Mn | Cr | Ni | Mo | W | V | Al | Fe | Ni + Mn |
|---|---|---|---|---|---|---|---|---|---|---|---|---|
| | 1 | 0.38 | 0.19 | 0.40 | 1.14 | 2.01 | 0.90 | < 0.01 | 0.48 | < 0.001 | Bal. | 2.41 |
| | 2 | 0.38 | 0.22 | 0.36 | 1.09 | 2.41 | 0.94 | < 0.01 | 0.47 | 0.003 | Bal. | 2.77 |
| | 3 | 0.39 | 0.19 | 0.38 | 1.11 | 3.50 | 0.91 | < 0.01 | 0.46 | 0.001 | Bal. | 3.88 |
| | 4 | 0.37 | 0.20 | 0.36 | 1.09 | 5.08 | 0.90 | < 0.01 | 0.49 | 0.001 | Bal. | 5.44 |
| | 5 | 0.37 | 0.23 | 0.40 | 1.12 | 7.98 | 0.89 | < 0.01 | 0.44 | 0.003 | Bal. | 8.38 |
| | 6 | 0.31 | 0.14 | 0.12 | 0.01 | 3.53 | 0.79 | < 0.01 | 0.31 | 0.003 | Bal. | 3.65 |
| | 7 | 0.32 | 0.12 | 0.15 | 0.25 | 3.52 | 0.79 | < 0.01 | 0.34 | 0.001 | Bal. | 3.67 |
| | 8 | 0.31 | 0.11 | 0.13 | 0.62 | 3.51 | 0.76 | < 0.01 | 0.33 | 0.002 | Bal. | 3.64 |
| Inventive Example | 9 | 0.33 | 0.14 | 0.13 | 1.33 | 3.47 | 0.77 | < 0.01 | 0.34 | < 0.001 | Bal. | 3.60 |
| | 10 | 0.31 | 0.13 | 0.12 | 1.95 | 3.47 | 0.76 | < 0.01 | 0.33 | 0.003 | Bal. | 3.59 |
| | 11 | 0.15 | 0.15 | 0.27 | 0.99 | 4.19 | 0.88 | < 0.01 | 0.39 | 0.001 | Bal. | 4.46 |
| | 12 | 0.27 | 0.20 | 0.25 | 1.00 | 4.16 | 0.88 | < 0.01 | 0.39 | 0.002 | Bal. | 4.41 |
| | 13 | 0.41 | 0.16 | 0.27 | 0.97 | 4.09 | 0.82 | < 0.01 | 0.40 | 0.003 | Bal. | 4.36 |
| | 14 | 0.44 | 0.16 | 0.29 | 1.00 | 4.12 | 0.83 | < 0.01 | 0.41 | < 0.001 | Bal. | 4.41 |
| | 15 | 0.39 | 0.20 | 0.80 | 1.10 | 3.49 | 0.92 | < 0.01 | 0.46 | 0.001 | Bal. | 4.29 |
| | 16 | 0.38 | 0.21 | 2.55 | 1.07 | 4.99 | 0.90 | < 0.01 | 0.48 | 0.001 | Bal. | 7.54 |
| | 17 | 0.38 | 0.20 | 0.81 | 1.09 | 3.50 | 0.92 | 0.65 | 0.44 | 0.045 | Bal. | 4.31 |
| | 18 | 0.39 | 0.19 | 0.38 | 1.11 | 3.50 | 0.91 | < 0.01 | 0.46 | 0.001 | Bal. | 3.88 |
| | 19 | 0.38 | 0.21 | 2.55 | 1.07 | 4.99 | 0.90 | < 0.01 | 0.48 | 0.001 | Bal. | 7.54 |

(continued)

|  | No. | C | Si | Mn | Cr | Ni | Mo | W | V | Al | Fe | Ni + Mn |
|---|---|---|---|---|---|---|---|---|---|---|---|---|
| Comparative Example | 1 | 0.39 | 0.20 | 0.39 | 1.11 | 0.01 | 0.92 | < 0.01 | 0.46 | 0.002 | Bal. | 0.40 |
|  | 2 | 0.39 | 0.21 | 0.38 | 1.11 | 1.57 | 0.91 | < 0.01 | 0.47 | 0.002 | Bal. | 1.95 |
|  | 3 | 0.39 | 0.21 | 0.38 | 1.10 | 8.93 | 0.94 | < 0.01 | 0.49 | < 0.001 | Bal. | 9.31 |
|  | 4 | 0.33 | 0.12 | 0.15 | 3.15 | 3.50 | 0.78 | < 0.01 | 0.34 | 0.002 | Bal. | 3.65 |
|  | 5 | 0.07 | 0.17 | 0.26 | 1.03 | 4.10 | 0.88 | < 0.01 | 0.43 | 0.002 | Bal. | 4.36 |
|  | 6 | 0.49 | 0.18 | 0.28 | 1.00 | 4.08 | 0.82 | < 0.01 | 0.42 | 0.003 | Bal. | 4.36 |
| * In each of Example Nos. 18 and 19, only tempering was carried out without quenching. | | | | | | | | | | | | |

[Production of raw material powder]

Each powder having a component composition described in Table 1 was obtained by a gas atomizing method. Herein, the component composition of an additively manufactured shaped article obtained by additive manufacturing with such powder is also substantially the same as the component composition of such powder. A specific production procedure of such powder is as follows. First, a melting raw material loaded in an alumina crucible was melted by high-frequency heating in a vacuum and argon atmosphere. This molten alloy was discharged through a nozzle having a diameter of 5 mm at the bottom of the crucible, and atomized with high-pressure argon gas immediately thereafter. This atomization allows the molten alloy to be divided into fine droplets, cooled and solidified while falling in a tower of the atomization apparatus, thereby forming an alloy powder. The resulting alloy powder was sieved with a sieve having a mesh size of 63 $\mu$m, and the undersize powder that passed through the sieve was used as a raw material powder in subsequent additive manufacturing.

[Additive manufacturing]

The additive manufacturing was carried out using an apparatus (EOS-M290 manufactured by EOS GmbH) employing a powder bed system with laser heating, with a preheating temperature set to 180°C according to standard shaping conditions (MS1 conditions) for maraging steel specified in the apparatus.
An annealed material of S45C was used as a plate serving as a shaping substrate, and a cylindrical body having a diameter of 180 mm and a height of 120 mm (with a curvature of R10 applied to the outer circumference of the joint interface between the plate and the shaped article and to the outer circumference of the top surface of the cylindrical body) and a rectangular body having a width of 15 mm, a length of 150 mm, and a height of 17 mm were shaped thereon.

[Evaluation]

Table 2 shows the surface layer hardness and the center hardness, the difference in these hardness values (surface layer hardness - center hardness), the thermal conductivity, as well as the presence or absence of cracking during shaping for each shaped article of the Examples and the Comparative Examples.

[Table 2]

|  | No. | Surface layer hardness HRC | Center hardness HRC | Difference in hardness (surface layer - center) | Thermal conductivity W/m/K | Cracking for shaping mm |
|---|---|---|---|---|---|---|
|  | 1 | 45.4 | 43.9 | 1.5 | 35.3 | 0.5 |
|  | 2 | 46.7 | 45.4 | 1.3 | 35.1 | None |
|  | 3 | 47.1 | 47.0 | 0.1 | 33.4 | None |
|  | 4 | 46.9 | 46.8 | 0.1 | 31.4 | None |
|  | 5 | 46.5 | 46.4 | 0.1 | 25.2 | None |
|  | 6 | 42.4 | 41.3 | 1.1 | 45.0 | None |
|  | 7 | 41.9 | 41.9 | 0.0 | 43.6 | None |

(continued)

| | No. | Surface layer hardness HRC | Center hardness HRC | Difference in hardness (surface layer - center) | Thermal conductivity W/m/K | Cracking for shaping mm |
|---|---|---|---|---|---|---|
| Inventive Example | 8 | 42.5 | 42.0 | 0.5 | 41.9 | None |
| | 9 | 43.0 | 42.9 | 0.1 | 36.3 | None |
| | 10 | 42.4 | 42.4 | 0.0 | 31.9 | None |
| | 11 | 41.0 | 40.7 | 0.3 | 39.6 | None |
| | 12 | 44.3 | 44.3 | 0.0 | 36.3 | None |
| | 13 | 44.1 | 43.8 | 0.3 | 33.7 | None |
| | 14 | 45.4 | 45.4 | 0.0 | 32.0 | 0.5 |
| | 15 | 47.4 | 47.0 | 0.4 | 32.1 | None |
| | 16 | 46.7 | 46.5 | 0.2 | 36.2 | None |
| | 17 | 47.8 | 47.0 | 0.8 | 31.9 | None |
| | 18 | 47.9 | 47.2 | 0.7 | 31.1 | None |
| | 19 | 47.4 | 47.0 | 0.4 | 33.5 | None |
| Comparative Example | 1 | 47.4 | 43.3 | 4.1 | 39.1 | 12.5 |
| | 2 | 46.6 | 42.4 | 4.2 | 36.7 | 7.0 |
| | 3 | 47.9 | 47.6 | 0.3 | 23.1 | None |
| | 4 | 41.9 | 41.7 | 0.2 | 23.2 | None |
| | 5 | 37.9 | 37.5 | 0.4 | 41.8 | None |
| | 6 | 46.7 | 46.4 | 0.3 | 31.5 | 18.0 |
| * In each of Example Nos. 18 and 19, only tempering was carried out without quenching. | | | | | | |

In order to evaluate the hardness after quenching and tempering in both a surface layer portion and a deep portion of a large-sized shaped article, a large-sized cylindrical body having a diameter of 180 mm and a height of 120 mm was cut from the plate by wire cutting. The specimen was subjected to quenching and tempering in an atmospheric furnace, and the Rockwell hardness of test pieces taken from the surface layer portion and the deep portion was measured. The quenching was performed by holding at 1030°C for 1 hour followed by oil cooling. Subsequently, tempering was performed by holding at 600°C for 4 hours followed by air cooling, and the same tempering treatment was repeated twice. In Example Nos. 18 and 19, quenching was omitted and only tempering was carried out. After the quenching and tempering treatment, 10-mm square blocks were cut out from the outermost circumferential portion at the height center position and from the central portion of the large-sized cylindrical body. The Rockwell hardness was measured on a surface parallel to the stacking direction. The Rockwell hardness of the block cut from the outermost circumferential portion was defined as "surface layer hardness," and that of the block cut from the central portion was defined as "center hardness." The Rockwell hardness measurement was conducted using a Rockwell hardness tester in accordance with JIS Z 2245:2016.

The optimal hardness for use of various tools varies depending on the intended application, and there are applications where about 40 HRC is preferred and applications where about 50 HRC is preferred. When the hardness differs between a surface layer portion and a deep portion due to poor hardenability, it becomes difficult to adjust the entire tool to the optimal hardness for use, which may lead to failures. Therefore, apart from the absolute hardness value, the variation in hardness depending on location was evaluated as the difference between the surface layer hardness and the center hardness (surface layer hardness - center hardness).

A test piece was cut out from the outermost circumferential portion at the height center position of the large-sized cylindrical body after quenching and tempering in the same manner as described above, and was used to measure thermal conductivity. A test piece finished to a circular plate shape of 5 mm diameter × 1 mm thickness was used to measure thermal conductivity at room temperature by a laser flash method.

Since additive manufacturing involves rapid melting and rapid solidification, even an additively manufactured shaped article in an as-built state may be in a pseudo-quenched state. Therefore, an additively manufactured shaped article may sometimes be used after only tempering or stress-relief heat treatment, without applying any quenching treatment, after additive manufacturing. Here, only tempering was carried out without quenching carried out in some Examples (Nos. 18 and 19).

The rectangular body having a width of 15 mm, a length of 150 mm, and a height of 17 mm was used for evaluation of resistance to cracking during shaping. This rectangular body does not have any curvature at the interface with the plate, unlike the large-sized cylindrical body, and therefore the interface is perpendicular, causing thermal stress to concentrate at this site. In addition, thermal stress is larger in the longitudinal direction, where the amount of thermal deformation is greater. As a result, in the case of a shaped article with low resistance to cracking, cracking occurs at the interface between the plate and the shaped article at an end of the 150 mm length. Accordingly, this site was visually observed with a magnifying glass, and resistance to cracking during shaping was evaluated based on the presence or absence of cracking and the crack length.

Each of the shaped articles of Example Nos. 1 to 19 according to the present invention exhibits surface layer hardness and center hardness of 40 HRC or more, and has excellent hardness. In additive, the difference between the surface layer hardness and the center hardness is 1.5 HRC or less, and the variation in hardness is suppressed. Furthermore, the thermal conductivity is 25 W/m/K or more (30 W/m/K or more in most of the Examples), and both hardness and thermal conductivity are excellent. Furthermore, no cracking is observed in most of the Examples, and even in a case where cracking is observed, the crack length is limited to 0.5 mm, exhibiting excellent resistance to cracking during shaping.

In each of Comparative Examples No. 1 and No. 2, Ni was insufficient, the surface layer hardness and the center hardness of the shaped article varied, and a large crack was observed.

In Comparative Example No.3, Ni was excessive, and the thermal conductivity was low.

In Comparative Example No.4, Cr was excessive, and the thermal conductivity was low.

In Comparative Example No.5, C was insufficient, and the hardness of the shaped article was low.

In Comparative Example No.6, C was excessive, and a large crack was observed.

## Claims

1. A hot-work tool steel powder for shaping, consisting of, in terms of % by mass,

   the following essential additive components:

   C: more than 0.10% and less than 0.45%; and
   Ni: more than 2.00% and less than 8.00%,

   one or more of the following optional additive components:

   Si: less than 0.60%;
   Mn: less than 5.00%;
   Cr: less than 2.00%;
   Mo: less than 1.20%;
   W: less than 2.00%;
   V: less than 0.60%; and
   Al: less than 0.10%, and

   the balance consisting of Fe and inevitable impurities,
   wherein Ni + Mn is less than 8.50%.

2. A shaped article produced using the hot-work tool steel powder for shaping according to claim 1.

3. The shaped article according to claim 2, wherein the shaped article is an additively manufactured shaped article.

## INTERNATIONAL SEARCH REPORT

| International application No. |
| --- |
| **PCT/JP2024/026232** |

### A. CLASSIFICATION OF SUBJECT MATTER

***B22F 1/00***(2022.01)i; ***B22F 10/28***(2021.01)i; ***B22F 10/362***(2021.01)i; ***B33Y 70/00***(2020.01)i; ***B33Y 80/00***(2015.01)i; ***C22C 38/00***(2006.01)i; ***C22C 38/58***(2006.01)i
FI: B22F1/00 S; C22C38/00 304; B22F10/28; B22F10/362; B33Y70/00; B33Y80/00; C22C38/00 301Z; C22C38/58

According to International Patent Classification (IPC) or to both national classification and IPC

### B. FIELDS SEARCHED

Minimum documentation searched (classification system followed by classification symbols)

B22F1/00; B22F10/28; B22F10/362; C22C38/00-38/60

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| A | JP 2019-196523 A (JTEKT CORP.) 14 November 2019 (2019-11-14)<br>paragraph [0012], fig. 1 | 1-3 |
| A | ものづくり情報支援サイト, あろろい, [online], 15 February 2022 [retrieved on 27 September 2024], Internet: <URL: https://aroroi.com/2022/02/15/%E5%B7%A5%E5%85%B7%E9%8B%BC%E3%81%AE%E5%8C%96%E5%AD%A6%E6%88%90%E5%88%86%E3%81%AB%E3%81%A4%E3%81%84%E3%81%A6%EF%BC%88skd%E3%83%BBsk%E3%83%BBskh%EF%BC%89/>, 工具鋼の化学成分について(SKD・SK・SKH), (Alloy & Alloy), non-official translation (Manufacturing Information Support Website, About the Chemical Composition of Tool Steel (SKD, SK, SKH))<br>For Hot Molds, SKT6 | 1-3 |
| A | JP 2023-520297 A (ROVALMA, S.A.) 17 May 2023 (2023-05-17)<br>paragraph [0033], 24 in paragraph [0327] | 1-3 |

☑ Further documents are listed in the continuation of Box C.    ☑ See patent family annex.

| * Special categories of cited documents: | |
| --- | --- |
| "A" document defining the general state of the art which is not considered to be of particular relevance | "T" later document published after the international filing date or priority date and not in conflict with the application but cited to understand the principle or theory underlying the invention |
| "D" document cited by the applicant in the international application | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **27 September 2024** | **08 October 2024** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

## INTERNATIONAL SEARCH REPORT

International application No.

**PCT/JP2024/026232**

### C.    DOCUMENTS CONSIDERED TO BE RELEVANT

| Category* | Citation of document, with indication, where appropriate, of the relevant passages | Relevant to claim No. |
|---|---|---|
| A | JP 2022-35110 A (NIPPON CHUZO CO., LTD.) 04 March 2022 (2022-03-04) claims, paragraph [0029], table 1 | 1-3 |
| A | JP 2018-123428 A (JFE STEEL CORPORATION) 09 August 2018 (2018-08-09) claims, samples no. 23-26, 28 on table 1 | 1-3 |
| A | JP 6-306403 A (KAWASAKI STEEL CORP.) 01 November 1994 (1994-11-01) examples, no. 14 on table 2 | 1-3 |

Form PCT/ISA/210 (second sheet) (July 2022)

## INTERNATIONAL SEARCH REPORT
### Information on patent family members

International application No.

**PCT/JP2024/026232**

| Patent document cited in search report | | | Publication date (day/month/year) | Patent family member(s) | | | Publication date (day/month/year) |
|---|---|---|---|---|---|---|---|
| JP | 2019-196523 | A | 14 November 2019 | US 2019/0344387 A1 paragraph [0016], fig. 1 | | | |
| JP | 2023-520297 | A | 17 May 2023 | US 2023/0364674 A1 paragraph [0033], 24 in paragraph [0561] WO 2021/165545 A1 EP 4106935 A1 KR 10-2022-0155430 A | | | |
| JP | 2022-35110 | A | 04 March 2022 | (Family: none) | | | |
| JP | 2018-123428 | A | 09 August 2018 | (Family: none) | | | |
| JP | 6-306403 | A | 01 November 1994 | (Family: none) | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2022092524 A